# EUROPÄISCHE PATENTSCHRIFT

(11) **EP 0 918 172 B1**
(45) Veröffentlichungstag und Bekanntmachung des Hinweises auf die Patenterteilung: **03.12.2003**
(21) Anmeldenummer: 98119061.4
(22) Anmeldetag: 08.10.1998
(51) Int. Cl.: F16D 69/02, F16D 69/04

(54) **Verfahren zur Herstellung einer Trägerplatte für Reibbeläge**
Process for making a backing plate for a friction element
Procédé de fabrication d'une plaque support pour élément de friction

(30) Priorität: 22.11.1997 DE 19751871
(43) Veröffentlichungstag der Anmeldung: 26.05.1999
(73) Patentinhaber: Federal-Mogul Friction Products GmbH, 51709 Marienheide (DE)
(72) Erfinder: Bleicker, Klaus, 51709 Marienheide (DE); Eckert , Alfred, 63607 Wächtersbach (DE); Kretschmann, Gerd, 51643 Gummersbach (DE)

(56) Entgegenhaltungen:
- DE-U- 8 201 404
- US-A- 2 080 314
- US-A- 4 924 583
- US-A- 5 205 877

## Beschreibung

Die Erfindung betrifft ein Verfahren zur Herstellung einer Trägerplatte für Reibbeläge, insbesondere für Bremsen von Kraftfahrzeugen, mit auf der Reibbelag tragenden Seite kraft- und formschlußbildende Formkörper in Form eines Drahtgitters als Rauhgrund, wobei das auf die Trägerplatte aufgelegte Drahtgitter durch Schweißen mit der Trägerplatte verbunden wird.

Reibbeläge von Kraftfahrzeugbremsen, insbesondere für Scheibenbremsen, sind auf einer Trägerplatte aus metallischem Werkstoff angeordnet. Die Trägerplatte wird üblicherweise aus Stahl oder legiertem Stahl gefertigt. Der Reibbelag ist bevorzugt über eine Klebstoffschicht fest mit der Trägerplatte verbunden. Zur Verbesserung der Verbindung gegenüber Scherkräften können in der Trägerplatte Öffnungen vorgesehen sein, in denen Fortsätze des Reibbelages angeordnet sind. Der Nachteil dieser Konstruktion liegt darin, dass durch die Öffnungen Feuchtigkeit eindringen kann, so dass eine Korrosion kriechend von diesen Öffnungen ausgehen kann, die zu einer Unterrostung der Reibbeläge führt. Eine einwandfreie Funktion der Bremse ist dann nicht mehr gewährleistet.
Um dieses Problem zu beheben wurden Trägerplatten entwickelt, auf denen auf der den Reibbelag tragenden Seite ein Halterungsbett aufgesintert oder aufgeschweißt wurde.

Aus dem DE GM 8 201404 ist eine solche Trägerplatte zu entnehmen. Ein als Drahtgitter ausgebildetes Halterungsbett fungiert als Rauhgrund für den Reibbelag. Der Reibbelag wird auf das Drahtgitter gepreßt und dabei unter Auffüllung der Gitterzellen fest mit der Trägerplatte verbunden.
Es hat sich gezeigt, dass bei modernen Hochleistungsbremsanlagen an die Verbindung zwischen Drahtgitter und Trägerplatte besondere Anforderungen gestellt werden müssen, um zu verhindern, dass sich das Drahtgitter von der Trägerplatte löst.

Die US-A-2080314 offenbart ein Verfahren zur Herstellung einer Trägerplatte mit einem aufgeschweißten Drahtgitter. Das Drahtgitter wird auf eine Trägerplatte aufgelegt und auf irgendeine Weise gehalten. In einem weiteren Arbeitsschritt wird das Drahtgitter dann mit der Trägerplatte schweißtechnisch verbunden. Diese Art der Herstellung hat den Nachteil, dass zwei Arbeitsschritte hintereinander geschaltet werden müssen, um eine Verbindung zwischen den einzelnen Bauteilen zu erzeugen. Neben der Erhöhung der Herstellungskosten ist darüber hinaus auch keine optimale Verbindung zwischen Trägerplatte, Drahtgitter und Reibbelag geschaffen.

Der Erfindung liegt die Aufgabe zugrunde, eine unlösbare Verbindung zwischen Drahtgitter und Trägerplatte zu schaffen, die einerseits im Hinblick auf die Herstellungskosten besonders günstig ist und andererseits die Eigenschaften der einzelnen Bauteile hinsichtlich der Härte, Oberflächengüte und Korrosionsfestigkeit nicht negativ beeinflußt.
Diese Aufgabe wird erfindungsgemäß durch die kennzeichnenden Merkmale des Patentanspruchs 1 gelöst. Eine vorteilhafte Ausgestaltung der Erfindung ist im Unteranspruch dokumentiert.
Bei dem erfindungsgemäßen Verfahren fließt im Millisekundenbereich ein Strom in die Bauteile. An allen mit der Oberfläche der Trägerplatte in Kontakt stehenden Bereichen erfolgt eine Verschweißung. Beim erfindungsgemäßen Verfahren wird einerseits ein besonderes Drahtgitter verwendet und andererseits in einem einzigen Prozeß das Drahtgitter aufgelegt und gleichzeitig mittels eines Stromstoßes mit der Trägerplatte verbunden. Damit entfällt der Transport zu einer weiteren Arbeitsstation, in der die Verbindung der Bauteile erfolgt. Da das Drahtgitter nur an den Eckpunkten der Gitterzellen mit der Trägerplatte verbunden wird, kann der aufgepresste Reibbelag zum großen Teil unter das Drahtgitter gepresst werden.

Gegenüber bisher durchgeführten Punktschweißverfahren ergibt sich somit eine kürzere Prozeßzeit, hinzu kommt, dass eine Erwärmung der Trägerplatte außerhalb der Schweißstelle nicht gegeben ist, so dass keine Veränderung im Gefüge erfolgt und ein Verziehen der Trägerplatte ausgeschlossen ist.

Die Anzahl der Schweißstellen ist abhängig von der Anzahl der Berührungsstellen zwischen Gitter und Trägerplatten. Da bei großen Trägerplatten größere Gitter als bei kleineren Trägerplatten verwendet werden, ist die Anzahl der Schweißstellen somit bei großen Trägerplatten größer als bei kleinen Trägerplatten. Die Prozeßzeit für die unterschiedlichen Baugrößen ist aber immer die gleiche, da sämtliche Schweißstellen gleichzeitig verschweißt werden. Durch die Vielzahl der Schweißstellen besteht somit auch nicht mehr die Gefahr des Ablösens.

Die Erfindung ist anhand eines Ausführungsbeispieles in der Zeichnung dargestellt und wird im folgenden näher erläutert. Es zeigen:
- Figur 1:: Teil einer Trägerplatte mit aufgeschweißtem Drahtgitter in der Draufsicht
- Figur 2:: Ansicht gemäß Schnittlinie II-II der Figur mit Schweißvorrichtung

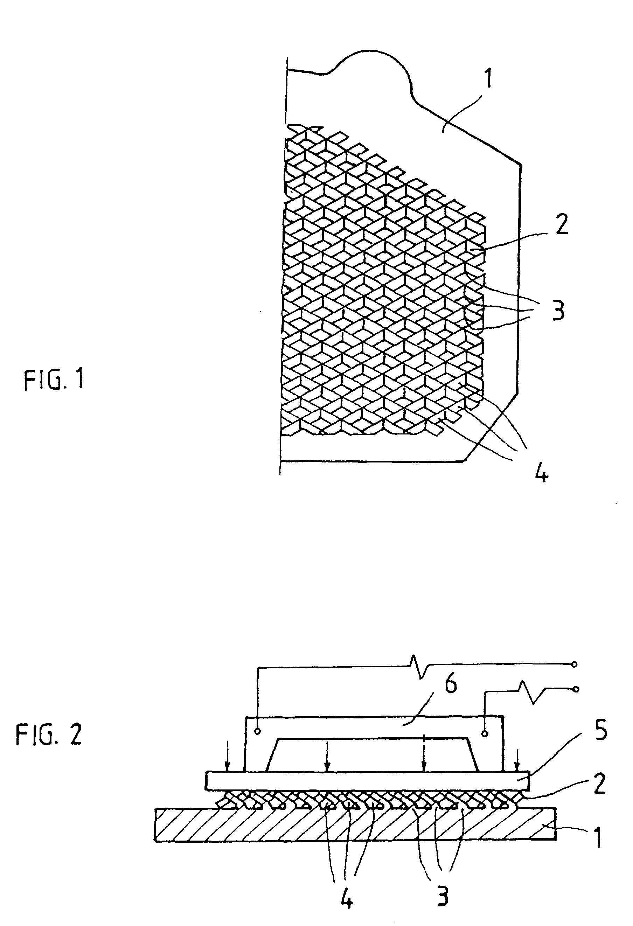

In der Figur 1 ist eine an sich bekannte Trägerplatte (1) für Scheibenbremsen von Kraftfahrzeugen dargestellt. Die aus metallischem Werkstoff bestehende Trägerplatte ist mit einem besonderen Drahtgitter (2) verschweißt. Das Drahtgitter (2) ist so ausgebildet, dass jeweils nur die Gitterzelleneckpunkte (3) des Drahtgitters (2) auf der Trägerplatte (1) aufliegen. Die Verbindungsstege (4) zwischen den Gitterzelleneckpunkten (3) weisen keinen Kontakt zur Trägerplatte (1) auf. Auf diese Weise kann der aufzupressende Reibbelag (nicht dargestellt) in diesen Bereich unter das Drahtgitter gepreßt werden und bildet so eine bessere Verankerung.
In der Figur 2 ist prinzipiell das erfindungsgemäße Herstellungsverfahren dargestellt. Mittels einer Haltevorrichtung (5) , z.B. im Form einer metallischen Platte, die auf die Oberfläche des auf die Trägerplatte (1) aufgelegten Drahtgitters (2) gedrückt wird, sind die Bauteile zunächst gehalten. Eine mit der Haltevorrichtung (5) verbundene Elektrode (6) ist mit einem nicht dargestellten Kondensator verbunden. Ein kurzer starker Stromstoß verschweißt das Drahtgitter (2) mit der Trägerplatte (1) an den Gitterzelleneckpunkten (3). Das Drahtgitter (2) ist somit an allen Kontaktstellen mit der Trägerplatte (1) verbunden. Mit Hilfe des Kondensatorimpulsschweißens läßt sich die Schweißenergie sehr genau den jeweiligen Erfordernissen anpassen, so dass an der Schweißstelle keine Deformationen entstehen.

## Patentansprüche

1. Verfahren zur Herstellung einer Trägerplatte (1) für Reibbeläge, insbesondere für Bremsen von Kraftfahrzeugen, mit auf der Reibbelag tragenden Seite kraft- und fbrmschlußbildende Formkörper in Form eines Drahtgitters (2) als Rauhgrund, wobei das auf die Trägerplatte (1) aufgelegte Drahtgitter (2) durch Schweißen mit der Trägerplatte (1) verbunden wird, **dadurch gekennzeichnet, dass** das Drahtgitter (2) mittels einer Haltevorrichtung (5) gehalten und anschließend durch die Haltevorrichtung (5) ein Stromstoß in das Drahtgitter (2) geleitet wird, wobei ein Drahtgitter (2) verwendet wird, dessen Gitterzellen nur in den Gitterzelleneckpunkten (3) in Kontakt mit der Oberfläche der Trägerplatte (1) steht, so dass nur die Gitterzelleneckpunkte (3) mit der Trägerplatte (1) verschweißt werden.

2. Verfahren nach Anspruch 1 und 2, **dadurch gekennzeichnet, dass** das Drahtgitter (2) durch Kondensatorimpulsschweißen mit der Trägerplatte (1) verbunden wird.

## Claims

1. Method for producing a backing plate (1) for friction linings, in particular for brakes of automotive vehicles, having moulded bodies forming a frictional and interlocking connection, on the side bearing the friction lining, in the form of a wire grating (2) as a rough base, the wire grating (2) placed on the backing plate (1) being connected by welding to the backing plate (1), **characterised in that** the wire grating (2) is retained by means of a retaining device (5) and subsequently a current surge being conducted by the retaining device (5) into the wire grating (2), a wire grating (2) being used, the grating cells of which are in contact with the surface of the backing plate (1) only in the comer points (3) of the grating cells so that only the comer points (3) of the grating cells are welded to the backing plate (1).

2. Method according to claim 1 and 2, c haracterised in that the wire g rating ( 2) is connected to the backing plate (1) by capacitor pulsed current arc welding.

## Revendications

1. Procédé pour la fabrication d'une plaque de support (1) pour garnitures de friction, en particulier pour freins de véhicules, comportant, sur la face supportant la garniture de friction des corps réalisés de manière adaptée en forme et en force, sous la forme d'un treillis (2) en tant que base rugueuse, le treillis (2) disposé sur la plaque de support (1) étant relié à la plaque de support (1) par soudage, **caractérisé en ce que** le treillis (2) est maintenu au moyen d'un dispositif de maintien (5) et une impulsion de courant est ensuite envoyée dans le treillis (2) à travers le dispositif de maintien (5), un treillis (2) étant utilisé dont les cellules de treillis ne sont en contact de la surface supérieure de la plaque de support (1) seulement au niveau des points angulaires (3) des cellules de treillis, de sorte que seuls les points angulaires de cellule de treillis (3) sont soudés à la plaque de support (1).

2. Procédé selon la revendication 1, **caractérisé en ce que** le treillis (2) est relié à la plaque de support (1) par soudage par impulsion de condensateur.
